(19)

**Europäisches Patentamt**
**European Patent Office**
**Office européen des brevets**

(11) **EP 4 650 715 A1**

(12) **EUROPEAN PATENT APPLICATION**
published in accordance with Art. 153(4) EPC

(43) Date of publication:
**19.11.2025 Bulletin 2025/47**

(21) Application number: **24817458.3**

(22) Date of filing: **09.04.2024**

(51) International Patent Classification (IPC):
**G01C 21/16** $^{(2006.01)}$

(52) Cooperative Patent Classification (CPC):
**F16L 55/26; G01B 11/24; G01C 9/02; G01C 21/16; G01C 25/00;** F16L 2101/30

(86) International application number:
**PCT/KR2024/004767**

(87) International publication number:
**WO 2025/198080 (25.09.2025 Gazette 2025/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2024 KR 20240039852**

(71) Applicant: **Korea Gas Corporation**
**Daegu 41062 (KR)**

(72) Inventors:
• **YOO, Kwang Hyun**
  **Yeonsu-gu Incheon 21993 (KR)**

• **KIM, Dong Kyu**
  **Yeonsu-gu Incheon 21993 (KR)**
• **KIM, Dae Kwang**
  **Yeonsu-gu Incheon 21993 (KR)**
• **KIM, Jae Jun**
  **Yeonsu-gu Incheon 21993 (KR)**
• **YANG, Seung Ung**
  **Yeonsu-gu Incheon 21993 (KR)**
• **SONG, Hong Seok**
  **Yeonsu-gu Incheon 21993 (KR)**
• **YOO, Hui Ryoung**
  **Yeonsu-gu Incheon 21993 (KR)**

(74) Representative: **BCKIP Part mbB**
**MK1**
**Landsbergerstraße 98, 3.Stock**
**80339 München (DE)**

(54) **METHOD AND APPARATUS FOR MEASURING POSTURE**

(57) According to an embodiment of the present invention, a method of measuring a posture is provided. The method may include generating three-dimensional shape information of a pipe in which a moving body moves, generating an extension vector of the pipe from the three-dimensional shape information, generating a direction vector indicating a direction in which the moving body is oriented, and generating a first inclination angle of the moving body with respect to the pipe based on the extension vector and the direction vector.

**EP 4 650 715 A1**

[FIG. 1]

100

```
          ┌─────────────┐
          │    START    │
          └─────────────┘
                 │
                 ▼
     ┌───────────────────────┐
     │  GENERATE THREE-      │── S110
     │  DIMENSIONAL SHAPE    │
     │     INFORMATION       │
     └───────────────────────┘
                 │
                 ▼
     ┌───────────────────────┐
     │  GENERATE EXTENSION   │── S120
     │       VECTOR          │
     └───────────────────────┘
                 │
                 ▼
     ┌───────────────────────┐
     │  GENERATE DIRECTION   │── S130
     │       VECTOR          │
     └───────────────────────┘
                 │
                 ▼
     ┌───────────────────────┐
     │   GENERATE FIRST      │── S140
     │  INCLINATION ANGLE    │
     └───────────────────────┘
                 │
                 ▼
          ┌─────────────┐
          │     END     │
          └─────────────┘
```

**Description**

[Technical Field]

The present invention relates to a posture measuring method and device.

[Background Art]

In-line inspection (ILI) technology using an ILI robot or an intelligent PIG plays an important role in managing pipe integrity. An intelligent PIG is driven by a gas pressure inside the pipe and acquires defect information, and digital mapping using an inertial navigation system is performed to match this defect information to a correct location.

Improving accuracy of localization in digital mapping is a very important factor in management of underground facilities. Currently, a navigation algorithm is operated to calculate (predict) a location, a speed, and a posture of the PIG using an acceleration and an angular velocity measured by an inertial measurement unit (IMU) based on an extended Kalman filter (EKF) and to perform update (correction) using a passage time and location coordinates of the PIG, which are measured by a time-based marker system (TBMS), and a measured speed value of a mileage meter (odometer).

However, this navigation algorithm performs the calculation under the assumption that a central line of the pipe and a central line of the intelligent PIG are aligned with each other. Thus, when there is an inclination between the central line of the pipe and the central line of the intelligent PIG, an error in navigation calculation occurs. To correct this, an inclination of the central line of the intelligent PIG with respect to the central line of the pipe should be measured, and in particular, inclinations in a pitch direction and a yaw direction should be accurately measured. This error may be compensated for in navigation calculation based on the inclination angle, thereby increasing accuracy of the location calculation.

[Detailed description of the Invention]

[Technical Problem]

The present invention is directed to providing a posture measuring method and device.

[Technical Solution]

A method of measuring a posture according to an embodiment of the present invention is provided. The method includes generating three-dimensional shape information of a pipe in which a moving body moves, generating an extension vector of the pipe from the three-dimensional shape information, generating a direction vector indicating a direction in which the moving body is oriented, and generating a first inclination angle of the moving body with respect to the pipe based on the extension vector and the direction vector.

Further, the first inclination angle may include a pitch angle and a yaw angle.

Further, the three-dimensional shape information may be based on depth data measured by a 3D depth sensor facing a front surface of the moving body.

Further, the three-dimensional shape information may be generated by matching a standard pipe shape with respect to the depth data.

Further, the extension vector may be a central vector of the pipe.

Further, the generating of the extension vector may include generating a first plane across the pipe from the three-dimensional shape information, generating a second plane parallel to the first plane, and generating the extension vector from a first feature point inside the first plane and a second feature point, which corresponds to the first feature point, inside the second plane.

Further, the first inclination angle may be generated by a vector difference between the extension vector and the direction vector.

Further, the method may further include acquiring a first rotational angle between a first guide part provided in the moving body and the moving body, acquiring a second rotational angle between a second guide part spaced apart from the first guide part in an extension direction of the moving body and the moving body, and generating a second inclination angle of the moving body with respect to the pipe from the first rotational angle and the second rotational angle.

Further, the second inclination angle may be generated according to Equation 1.

[Equation 1]

$$\alpha = \tan^{-1}\left(\frac{l_1 \sin\theta_1 - l_2 \sin\theta_2}{L - l_1 \cos\theta_1 + l_2 \cos\theta_2}\right)$$

In Equation 1, $\alpha$ is the second inclination angle, $\theta_1$ is the first rotational angle, $\theta_2$ is the second rotational angle, L is a distance between the first guide part and the second guide part, $l_1$ is a length of the first guide part, and $l_2$ is a length of the second guide part.

Further, the method may further include generating a third inclination angle based on the first inclination angle and the second inclination angle.

Further, in the generating of the third inclination angle, the same weight or different weights may be applied to the first inclination angle and the second inclination angle.

A computer program stored in a recording medium to execute the method according to the embodiment of the present invention is provided.

A device for measuring a posture according to the embodiment of the present invention is provided. The device includes a memory in which a program for executing a method of measuring a posture is stored and a processor that executes the program to generate three-dimensional shape information of a pipe in which a moving body moves, generate an extension vector of the pipe from the three-dimensional shape information, generate a direction vector indicating a direction in which the moving body is oriented, and generate a first inclination angle of the moving body with respect to the pipe based on the extension vector and the direction vector.

Further, the processor may generate a second inclination angle of the moving body with respect to the pipe from a first rotational angle between a first guide part provided in the moving body and the moving body and a second rotational angle between a second guide part spaced apart from the first guide part in an extension direction of the moving body and the moving body.

A system for measuring a posture according to an embodiment of the present invention is provided. The system includes the device for measuring a posture according to claim 13, a moving body that drives inside the pipe, a depth sensor that is provided in the moving body and generates depth data of the pipe, and an inertial sensor that is provided in the moving body and measures an acceleration and an angular velocity according to movement of the moving body.

Further, the system may further include an angle sensor that measures a rotational angle between a guide part connected to the moving body and the moving body.

[Advantageous Effects]

According to embodiments of the present invention, an inclination between a pipe and a moving body can be measured, and therefore accuracy of estimating a position of the moving body can be improved.

Further, according to embodiments of the present invention, an inclination angle can be calculated in an optical manner using a 3D depth sensor and/or an inclination angle can be calculated in a physical manner using a guide part. An accurate inclination angle that is resistant to external disturbances can be calculated using the combination of two different manners.

Further, according to embodiments of the present invention, accuracy of location estimation can be secured, and thus a more accurate pipe numerical map can be generated, and a level of integrity management of an underground buried pipe can be improved.

Effects obtained from the embodiments of the present invention are not limited to the above-described effects, and other effects that have not been described will be clearly understood by those skilled in the art to which the present invention pertains from the following description.

[Description of Drawings]

A brief description of the drawings is provided so that the drawings cited in the present invention can be better understood.

FIG. 1 is a flowchart of a posture measuring method according to an embodiment of the present invention.
FIG. 2 is a flowchart of a posture measuring method according to an embodiment of the present invention.
FIG. 3 is a flowchart of a posture measuring method according to an embodiment of the present invention.
FIG. 4 is a block diagram of a posture measuring device according to an embodiment of the present invention.
FIG. 5 is a block diagram of a posture measuring system according to an embodiment of the present invention.
FIG. 6 is an exemplary view for describing posture measurement according to an embodiment of the present invention.

FIG. 7 is an exemplary view for describing a posture measurement according to an embodiment of the present invention.

FIG. 8 is an exemplary view for describing a posture measurement according to an embodiment of the present invention.

FIG. 9 is an exemplary view for describing a posture measurement according to an embodiment of the present invention.

[Modes of the Invention]

The technical spirit of the present invention may be modified in various ways and may have various embodiments, and thus specific embodiments will be illustrated in the accompanying drawings and described in detail. However, this is not intended to limit the technical spirit of the present invention to a specific embodiment, and the present invention should be understood to include all changes, equivalents, or substitutes included in the scope of this technical spirit of the present invention.

In describing the technical spirit of the present invention, when it is determined that detailed description of related widely known technology may unnecessarily obscure the subject matter of the present invention, the detailed description thereof will be omitted.

Terms used in the specification are used to describe embodiments and are not intended to restrain and/or limit the present invention. Singular expressions include plural expressions unless clearly otherwise indicated in the context. Further, numbers (e.g., first, second, or the like) used in describing the present invention are merely identification symbols for distinguishing a first component from a second component.

In the specification, when a first part is connected to a second part, this includes not only a case in which the first part is directly connected to the second part but also a case in which the first part is indirectly connected to the second part with a third part interposed therebetween. Further, when a first part includes a second part, this means that a third part is not excluded but may be further included unless otherwise specifically stated.

Further, in the present invention, the term "or" is intended to mean not an exclusive "or" but an inclusive "or." That is, a state in which "X uses A or B" is intended to mean one of natural inclusive substitutions when not otherwise specified or unclear in the context. That is, "X uses A or B" may apply to any of the cases when X uses A, when X uses B, or when X uses both A and B. Further, the term "and/or" used herein should be understood to refer to and include all possible combinations of one or more of the listed related components.

Further, terms such as "unit," "device," "part," and "module" mean units that process at least one function or operation, which may be implemented by hardware such as a processor, a micro processor, a micro controller, a central processing unit (CPU), a graphics processing unit (GPU), an accelerate processor unit (APU), a digital signal processor (DSP), an application specific integrated circuit (ASIC), and a field programmable gate array (FPGA), software, or a combination of hardware and software.

Further, it is clarified that distinguishment of the components in the present invention is merely distinguishment based on main functions that the components are in charge of. That is, two or more components described below may be combined into one component or one component may be divided into two or more components according to more detailed functions. Further, each of the components described below may additionally perform some or all functions that other components are in charge of in addition to a main function that the component is in charge of, and some of the main functions that the components are in charge of may be assigned to and performed by other components.

The method according to the embodiment of the present invention may be performed in a personal computer, a workstation, a server computer device having computational power, or the like, or in a separate device for this purpose.

Further, the method may be performed in one or more computational devices. For example, at least one operation of the method according to the embodiment of the present invention may be performed in a client device, and other operations may be performed in a server device. In this case, the client device and the server device may be connected to a network to transmit and receive a computational result. Alternatively, the method may be performed by distributed computing technology.

Hereinafter, embodiments of the present invention will be sequentially described in detail.

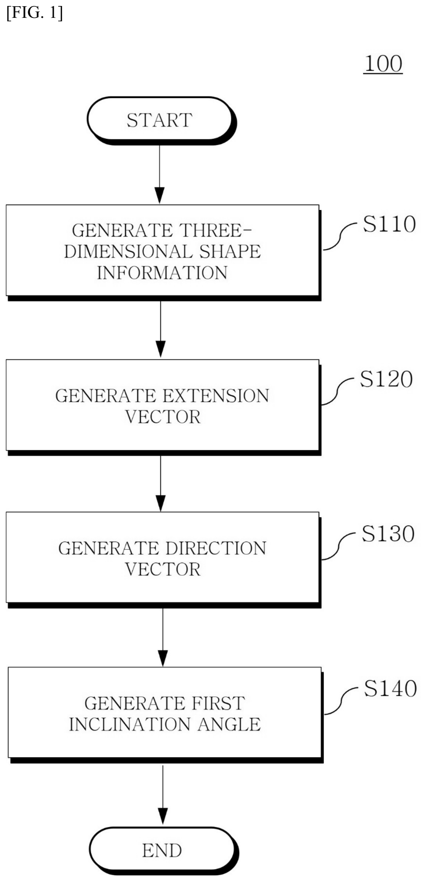

FIG. 1 is a flowchart of a posture measuring method according to an embodiment of the present invention.

In step S110, three-dimensional shape information of a pipe may be generated. Here, the three-dimensional shape information of the pipe may relate to the shape of the inside of the pipe in which a pipe moving device (particularly, a moving body) moves. For example, the three-dimensional shape information may include information on the shape of an inner surface of the pipe and an inner space of the inner surface.

In the embodiment, the three-dimensional shape information may be based on depth data measured by a 3D depth sensor. The 3D depth sensor may recognize a three-dimensional space by measuring a depth of a surrounding environment. The 3D depth sensor may include, for example, a time-of-flight (TOF) sensor, a stereo camera, a structured light sensor, a light detection and ranging (LiDAR) sensor, and the like.

In the embodiment, the 3D depth sensor may be located to face a front surface of the moving body. That is, the 3D depth sensor may be located in a moving direction of the moving body and thus generate the three-dimensional shape information of the pipe that moves or is to be moved.

In the embodiment, the 3D depth sensor may generate data on the depth, spatial information, and the like of the surrounding environment. For example, the data may include a point cloud, a depth map, a distance map, a depth image, a surface normal vector, and the like.

In the embodiment, the 3D depth sensor may generate data in the form of the point cloud. The point cloud is expressed as a set of points of an object in the three-dimensional space, and each of the points is expressed by three-dimensional coordinates (x, y, z) and may form a surface of the object.

In the embodiment, the three-dimensional shape information may be generated by matching depth data having a point cloud format to a standard pipe shape. Here, the matching (i.e., point-set registration) may mean mapping two different point cloud data sets into a common coordinate system or structure. That is, a three-dimensional shape of the pipe, particularly, shapes of an inner surface and an inner space of the pipe, and the standard pipe shape are matched with each other, and thus the three-dimensional shape of the pipe may be modeled more precisely. According to the embodiment of the present invention, various matching technologies such as an iterative closest point (ICP), coherent point drift (CPD), random sample consensus (RANSAC), and geometric feature matching may be applied to the matching. However, the present invention is not limited thereto.

In the embodiment, at least one standard pipe shape may be configured to represent various pipe shapes related to a straight pipe, a curved pipe (a horizontal curved pipe and a vertical curved pipe), a composite curved pipe, a branch pipe, and the like. For example, the standard pipe shape for the straight pipe may be a cylinder. For example, the standard pipe shape for the curved pipe may be a curved cylinder. In this case, the three-dimensional shape information may be generated by performing cylinder matching and curved cylinder matching with respect to the depth data. However, the present invention is not limited thereto.

In operation S120, an extension vector of the pipe may be generated from the three-dimensional shape information. Here, the extension vector of the pipe may indicate an extension direction (or a traveling direction) of the pipe.

In the embodiment, operation S120 may include generating a first plane across the pipe from the three-dimensional shape information, generating a second plane parallel to the first plane, and generating an extension vector from a first feature point in the first plane and a second feature point in the second plane corresponding to the first feature point.

In the embodiment, the first plane and the second plane may have the same size and shape and may be parallel to each other. In this case, a location of the first feature point in the first plane and a location of the second feature point in the second plane may correspond to each other. For example, the first plane and the second plane may be planes perpendicular to the inner surface of the pipe. Further, the first feature point and the second feature point may be center points of the first plane and the second plane. However, the present invention is not limited thereto.

Additionally, operation S120 may further include generating a third plane parallel to the first plane and the second plane. In this case, the extension vector may connect the first feature point in the first plane, the second feature point in the second plane, and a third feature point in the third plane.

In the embodiment, the extension vector may be a center vector of the pipe. Here, the center vector may be a vector from a center toward another center of the plane perpendicular to the inner surface of the pipe. In particular, when the three-dimensional shape information is matched by the standard pipe shape of the cylinder, the center vector may be a vector corresponding to a central axis of the cylinder. However, the present invention is not limited thereto.

In operation S130, a direction vector may be generated. The direction vector may indicate a direction in which the moving body is directed. For example, the direction vector may be generated based on an acceleration value and/or an angular velocity value of the moving body, which are measured by an inertial sensor. Further, for example, the direction vector may be generated based on posture information of the moving body. However, the present invention is not limited thereto.

In operation S140, a first inclination angle may be generated. Here, the inclination angle may represent a degree of inclination of the moving body with respect to the pipe. For example, the inclination angle may represent the posture information of the moving body with respect to the pipe. For example, the first inclination angle may include a pitch angle and a yaw angle.

In the embodiment, operation S140 may be performed based on the extension vector of operation S120 and the direction vector of operation S130. In more detail, the first inclination angle may be generated by a vector difference between the extension vector and the direction vector.

A method 100 illustrated in FIG. 1 is exemplary, and various configurations may be applied according to the embodiment of the present invention.

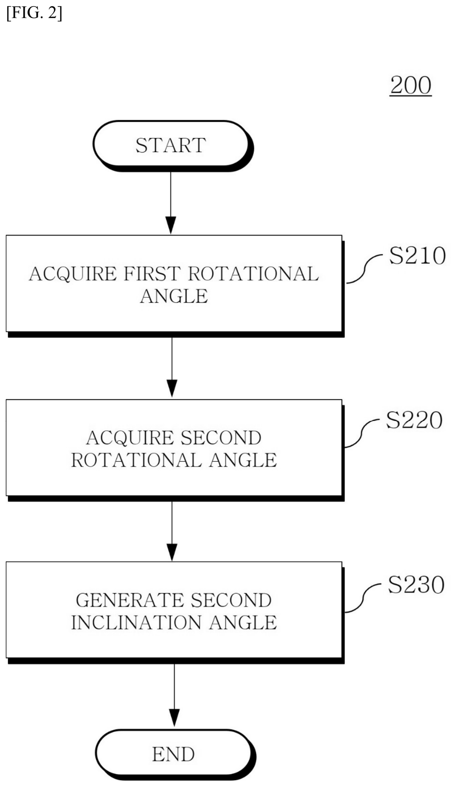

FIG. 2 is a flowchart of a posture measuring method according to an embodiment of the present invention.

A method 200 of FIG. 2 may be performed together with or independently of the method 100 of FIG. 1. In operation S210, a first rotational angle of a first guide part may be acquired. Here, the first guide part may be provided in the moving body and may guide driving of the moving body while in close contact with an inner wall of the pipe. For example, the first guide part may include at least one of a first guide wheel and a first support portion connecting the first guide wheel and the moving body. For example, the first rotational angle may be an angle between the moving body and the first guide wheel or an angle between the moving body and the first support portion. However, the present invention is not limited thereto.

In operation S220, a second guide part may acquire a second rotational angle. The second guide part and the second rotational angle can be described in the same way as the first guide part and the first rotational angle, but the second guide part may be spaced apart from the first guide part in an extension direction of the moving body.

In operation S230, a second inclination angle of the moving body with respect to the pipe may be generated from the first rotational angle and the second rotational angle. In operation S230, the fact that a relative distance between the moving body and the pipe varies according to a degree of inclination of the moving body is used. In detail, the second inclination angle may be generated based on the first rotational angle, the second rotational angle, a distance between the guide parts, and a length of the guide part.

In the embodiment, the second inclination angle may be generated according to Equation 1.

[Equation 1]

$$\alpha = \tan^{-1}\left(\frac{l_1 \sin\theta_1 - l_2 \sin\theta_2}{L - l_1 \cos\theta_1 + l_2 \cos\theta_2}\right)$$

In Equation 1, $\alpha$ represents the second inclination angle, $\theta_1$ represents the first rotational angle of the first guide part, and $\theta2$ represents the second rotational angle of the second guide part. L may represent a distance between the first guide part and the second guide part, $l_1$ may represent a length of the first guide part, and $l_2$ may represent a length of the second guide part.

Further, the distance between the first guide part and the second guide part may be a distance between a connection area between the first support portion and the moving body and a connection area between the second support portion and the moving body. The length of the first guide part and the length of the second guide part may be a distance from the connection area via the first support portion and the second support portion to the first guide wheel and the second guide wheel, respectively.

The method 200 illustrated in FIG. 2 is exemplary, and various configurations may be applied according to the embodiment of the present invention.

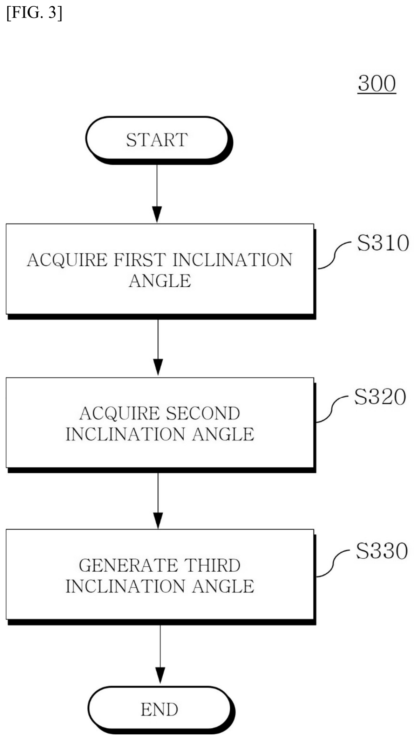

FIG. 3 is a flowchart of a posture measuring method according to an embodiment of the present invention.

In operation S310, the first inclination angle may be acquired. The first inclination angle may be generated according to the method 100.

In operation S320, the second inclination angle may be acquired. The second inclination angle may be generated according to the method 200.

In operation S330, a third inclination angle may be generated. Here, the third inclination angle may be a third inclination angle calculated by summing the first inclination angle and the second inclination angle.

In the embodiment, when the third inclination angle is generated, predetermined weights may be applied to the first inclination angle and the second inclination angle. The weight of the first inclination angle and the weight of the second inclination angle may be the same or different from each other.

In the embodiment, in operation S330, the same weight may be applied to the first inclination angle and the second inclination angle. For example, the third inclination angle may be calculated by averaging the first inclination angle and the second inclination angle.

In the embodiment, in operation S330, a higher weight may be applied to the second inclination angle than to the first inclination angle. When reliability of the extension vector and/or reliability of the direction vector is low, a higher weight may be applied to the second inclination angle, and the third inclination angle may be generated. For example, when foreign substances accumulated in the pipe, such as black powder, sludge, dust, and ash, are stuck to the 3D depth sensor and thus distortion or omission occurs in the depth data (e.g., point cloud data) measured by the 3D depth sensor, the weight of the second inclination angle may be increased. In this case, applying the higher weight to the second inclination angle may include a case in which the first inclination angle is completely excluded. However, the present invention is not limited thereto.

In the embodiment, in operation S330, a higher weight may be applied to the first inclination angle than to the second inclination angle. For example, when close contact between the guide part and the pipe is released, the weight of the first inclination angle may be increased. Further, for example, when the moving body drives on a circumferential welding part of the pipe having a local curve thereinside and a step part (including a curved pipe, a branch pipe, and the like) having a different pipe thickness, measurement reliability of the rotational angle of the guide part is lowered, and thus the weight of the first inclination angle may be increased.

In this case, applying the higher weight to the first inclination angle may include a case in which the second inclination angle is completely excluded. However, the present invention is not limited thereto.

The method illustrated in FIG. 3 is exemplary, and various configurations may be applied according to the embodiment of the present invention.

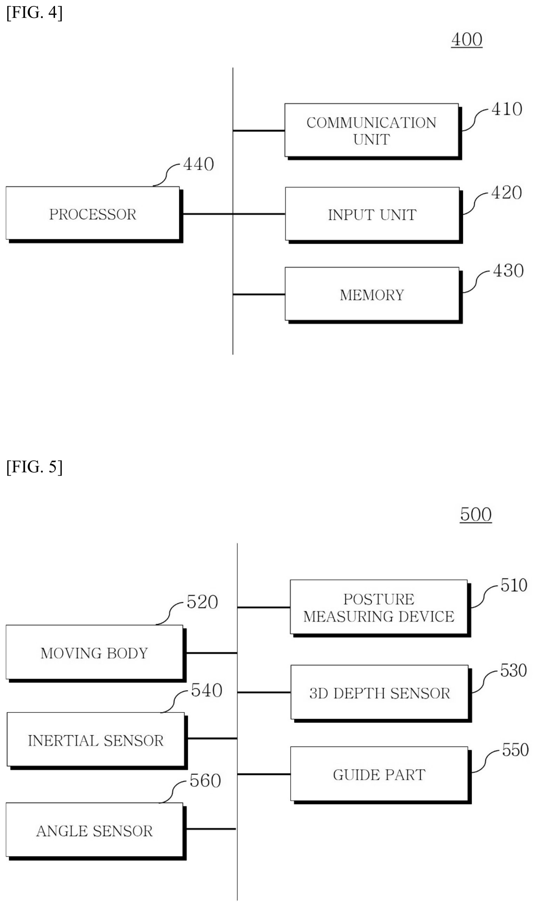

FIG. 4 is a block diagram of a posture measuring device according to an embodiment of the present invention.

A device 400 of FIG. 4 is configured to perform the posture measuring methods 100, 200, and 300, and specifically, may include a communication unit 410, an input unit 420, a memory 430, and a processor 440.

The communication unit 410 may receive or transmit data from or to the inside or the outside. The communication unit 410 may include a wired/wireless communication unit. When the communication unit 410 includes a wired communication unit, the communication unit 410 may include one or more components that communicate through a local area network (LAN), a wide area network (WAN), a value-added network (VAN), a mobile radio communication network, a satellite communication network, and a combination thereof. Further, when the communication unit 410 includes a wireless communication unit, the communication unit 410 may wirelessly transmit and receive data or a signal using cellular communication, a wireless LAN (e.g., Wi-Fi), or the like. In the embodiment, the communication unit 410 may transmit and receive data or a signal to and from an external device or an external server under control of the processor 440.

The input unit 420 may receive various user commands through external manipulation. To this end, the input unit 420 may include or be connected to one or more input devices. For example, the input unit 420 may be connected to an interface for various inputs such as a keypad and a mouse to receive the user commands. To this end, the input unit 420 may include not only a USB port but also an interface such as Thunderbolt. Further, the input unit 420 may include various input devices such as a touch screen and a button or may be coupled to the input devices to receive the external user commands.

The memory 430 may store a program and/or a program command for operating the processor 440 and may temporarily or permanently store input/output data. The memory 430 may include at least one type of storage medium among a flash memory type, a hard disk type, a multimedia card micro type, a card type memory (e.g., an SD or XD memory), a RAM, an SRAM, a ROM, an EEPROM, a PROM, a magnetic memory, a magnetic disk, and an optical disc.

Further, the memory 430 may store various network functions and algorithms and may store various pieces of data, programs (one or more instructions), applications, software, commands, and codes for driving and controlling the device 400.

The processor 440 may control an overall operation of the device 400. The processor 440 may execute one or more programs or software stored in the memory 430. The processor 440 may be a central processing unit (CPU), a graphics processing unit (GPU), or a dedicated processor 440 in which the methods according to the embodiments of the present invention are performed.

In the embodiment, the processor 440 may generate the three-dimensional shape information of the pipe in which the moving body moves, generate the extension vector of the pipe from the three-dimensional shape information, generate the direction vector indicating a direction in which the moving body is oriented, and generate the first inclination angle of the moving body with respect to the pipe based on the extension vector and the direction vector. Here, the first inclination angle may include a pitch angle and a yaw angle.

In the embodiment, the processor 440 may generate the extension vector, generate the first plane across the pipe from the three-dimensional shape information, generate the second plane parallel to the first plane, and generate the extension vector from the first feature point inside the first plane and the second feature point inside the second plane corresponding to the first feature point.

In the embodiment, the processor 440 may generate the first inclination angle based on the vector difference between the extension vector and the direction vector.

In the embodiment, the processor 440 may acquire the first rotational angle between the first guide part provided in the moving body and the moving body, acquire the second rotational angle between the second guide part, which is spaced apart from the first guide part in the extension direction of the moving body, and the moving body, and generate the second inclination angle of the moving body with respect to the pipe based on the first rotational angle and the second rotational angle.

In the embodiment, the processor 440 may generate the second inclination angle by Equation 1.

[Equation 1]

$$\alpha = \tan^{-1}\left(\frac{l_1 \sin\theta_1 - l_2 \sin\theta_2}{L - l_1 \cos\theta_1 + l_2 \cos\theta_2}\right)$$

In Equation 1, $\alpha$ is the second inclination angle, $\theta_1$ is the first rotational angle, $\theta_2$ is the second rotational angle, L is the distance between the first guide part and the second guide part, $l_1$ is the length of the first guide part, and $l_2$ is the length of the second guide part. Further, the distance between the first guide part and the second guide part may be the distance between the connection area between the first support portion and the moving body and the connection area between the second support portion and the moving body. The length of the first guide part and the length of the second guide part may be a distance from the connection area via the first support portion and the second support portion to the first guide wheel and the second guide wheel, respectively.

In the embodiment, the processor 440 may generate the third inclination angle based on the first inclination angle and the second inclination angle.

In the embodiment, the processor 440 may apply the same weight or different weights to the first inclination angle and the second inclination angle when generating the third inclination angle.

The device 400 illustrated in FIG. 4 is exemplary, and various configurations may be applied according to the embodiment of the present invention.

FIG. 5 is a block diagram of a posture measuring system according to an embodiment of the present invention.

Referring to FIG. 5, the posture measuring system 500 may include a posture measuring device 510, a moving body 520, a 3D depth sensor 530, an inertial sensor 540, and an angle sensor 560.

The posture measuring device 510 of FIG. 5 may be described in the same way as the posture measuring device 400 of FIG. 4, and in the posture measuring system 500, the moving body 520, the 3D depth sensor 530, the inertial sensor 540, and the angle sensor 560 may be referred to as a pipe moving device (or a pipe inspecting device). However, the present invention is not limited thereto.

In FIG. 5, the posture measuring device 510 and the moving body 520 are separately illustrated. However, this is exemplary, and according to the embodiment, at least a portion of the posture measuring device 510 may be provided in the moving body 520. For example, the posture measuring device 510 may be embedded in the moving body 520 and referred to as a portion of the pipe moving device or may be physically separated and spaced from the moving body 520 and, for example, implemented in the form of a server or a control device.

The moving body 520, which is a portion forming a body of the pipe moving device, may be inserted into the pipe to have a movable size and shape.

In the embodiment, the moving body 520 may accommodate various components thereinside and thereoutside. Further, the moving body 520 may allow the corresponding components to perform various functions of inspecting the inside of the pipe or the like while driving inside the pipe according to a pressure difference of fluid inside the pipe generated between a front end and a rear end of the moving body 520.

In the embodiment, the moving body 520 may be provided as one or a plurality of moving bodies 520. When the plurality of moving bodies 520 are provided, the moving bodies may be connected to each other through a link member such as a universal joint. For example, the moving body at the front end may be in charge of driving inside the pipe, and the moving body at the rear end may be in charge of pipe inspection. However, the present invention is not limited thereto.

In the embodiment, the driving cup may be provided on an outer surface of the moving body 520 and may be in close contact with the inner wall of the pipe to block flow of fluid in the pipe around the driving cup. Therefore, a pressure difference may be generated so that the moving body 520 may drive along the inside of the pipe. For example, the driving cup may be provided as one or a plurality of driving cups. When the plurality of driving cups are provided, the driving cups may be arranged on the outer surface of the moving body 520 to be spaced apart from each other in a longitudinal direction. However, the present invention is not limited thereto.

In the embodiment, at least a portion of the driving cup may be formed of an elastic material. Accordingly, when the moving body 520 drives inside the pipe, even when an inner diameter of the pipe is changed or a shape of the pipe is changed, as with a curved pipe, the driving cup may be elastically deformed and come into contact with the inner wall of the pipe. For example, the driving cup may be made of a urethane material that is elastic and has sufficient durability and wear resistance to withstand damage caused by contact with the inner wall of the pipe. However, the present invention is not limited thereto, and various materials such as silicone, neoprene, polyurethane, and a thermo plastic elastomer (TPE) may be applied.

The 3D depth sensor may be provided in the moving body 520 and measure the depth of the surrounding environment to recognize a 3D space. The 3D depth sensor may include, for example, a time-of-flight (TOF) sensor, a stereo camera, a structured light sensor, a light detection and ranging (LiDAR) sensor, and the like. In particular, the 3D depth sensor may be located to face a front surface of the moving body. Therefore, the 3D depth sensor may be located in a moving direction of the moving body and thus generate the three-dimensional shape information of the pipe that moves or is to be moved.

The inertial sensor 540 may be provided in the moving body 520 and may serve to measure and record a change in inertia according to the movement of the moving body 520 when the moving body 520 drives in the inner wall of the pipe. In detail, the inertial sensor 540 may include an accelerometer that measures an acceleration acting on the moving body 520 and an angular velocity meter that measures an angular velocity acting on the moving body 520. The accelerometer may measure acceleration along three axes such as a front-rear axis, a left-right axis, and an up-down axis, and the angular velocity meter may measure three-axis rotational angular velocities such as pitch, roll, and yaw. However, the present invention is not limited thereto.

The guide part 550 may extend from the moving body 520 toward the inner wall of the pipe and may guide the driving of the moving body 520 while in close contact with the inner wall of the pipe. In detail, the guide part 550 may include a guide wheel that rotates in close contact with the pipe and a support portion connecting the moving body and the guide wheel. The guide wheel may reduce friction between the moving body 520 and the pipe while rotating in close contact with the pipe, prevent an impact that may occur between the moving body 520 and the pipe, and/or prevent a sudden change in a posture of the moving body 520 inside the pipe. Further, the support portion may connect the guide wheel and the moving body 520 and may be rotatably connected to the moving body 520. A rotational angle measured by the angle sensor 560 may be a rotational angle between the support portion and the moving body 520.

The angle sensor 560 may measure an angle between the guide part and the moving body 520, that is, a rotational angle. One area of the guide part may be connected to the moving body 520 to extend toward the pipe. An angle between an extension direction of the guide part and a formation direction of the moving body 520 may be a rotational angle. The guide part may be bent or rotate with respect to the moving body 520 according to a degree of contact with the pipe, and the angle sensor 560 may periodically/aperiodically measure the changing rotational angle.

Although not illustrated, the system 500 may further include an odometer according to the embodiment. The odometer may be in close contact with the inner wall of the pipe and may rotate along the inner wall when the moving body 520 moves. A driving distance may be measured by changing a rotational amount measured by the odometer to a linear speed. In detail, the odometer may include a wheel part in close contact with the inner wall of the pipe, a rotation measuring part for measuring a rotational amount of the wheel part, and an extension part connecting the wheel part and the moving body 520. In the present invention, it is described that the angle sensor 560 measures a rotational angle between the guide part 550 and the moving body 520, but additionally/alternatively, the angle sensor 560 may also measure a rotational angle between the odometer and the moving body 520.

The system 500 illustrated in FIG. 5 is exemplary, and various configurations may be applied according to the embodiment of the present invention.

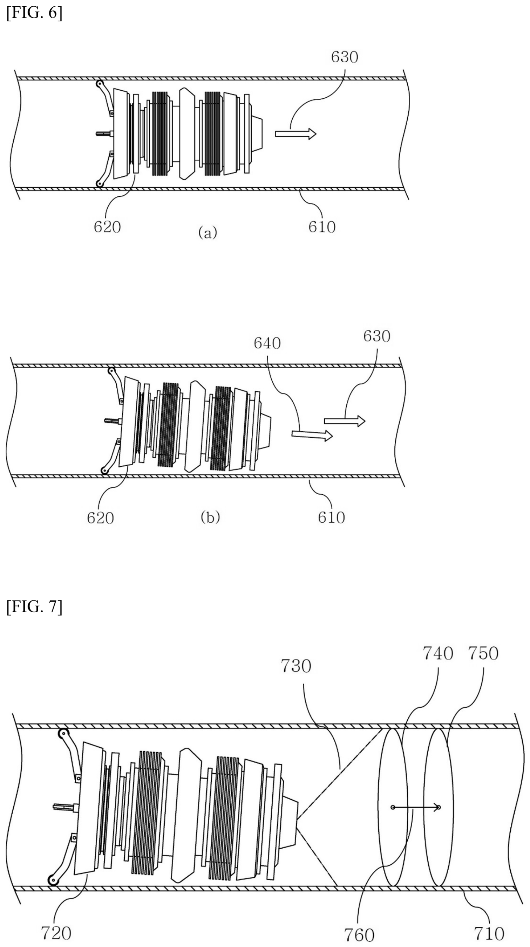

FIG. 6 is an exemplary view for describing a posture measurement according to an embodiment of the present invention.

As illustrated in FIG. 6A, when a moving body 620 moves while not inclined with respect to a pipe 610, an extension vector 630 of the pipe and a direction vector of the moving body 620 may coincide with each other.

In contrast, as illustrated in FIG. 6B, when the moving body 620 moves while inclined with respect to the pipe 610, the extension vector 630 of the pipe and the direction vector 640 of the moving body 620 may be offset from each other. When this is not corrected, an error may occur during navigation calculation of the moving body 620, and thus reliability of position estimation is inevitably lowered.

The illustration in FIG. 6 is exemplary, and various configurations may be applied according to the embodiment of the present invention.

FIG. 7 is an exemplary view for describing a posture measurement according to an embodiment of the present invention.

Referring to FIG. 7, a process of generating an extension vector 760 of a pipe 710 in a moving body 720 moving inside the pipe 710 is illustrated.

In detail, the moving body 720 may be inclined with respect to the pipe 710, and a 3D depth sensor provided in the moving body 720 may photograph a front side of the moving body 720 to acquire depth data 730. After pipe shape information is generated from the depth data 730, two planes 740 and 750 parallel to each other may be applied to the pipe shape information, and the extension vector 760 may be generated by connecting feature points located in the planes 740 and 750.

The illustration in FIG. 7 is exemplary, and various configurations may be applied according to the embodiment of the present invention.

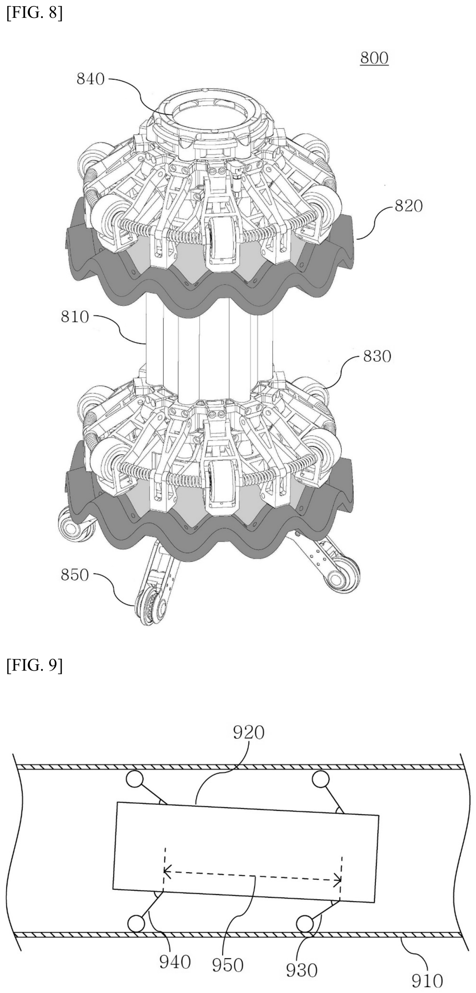

FIG. 8 is an exemplary view for describing a posture measurement according to an embodiment of the present invention.

Referring to FIG. 8, a pipe measuring system 800 is illustrated.

A moving body 810 may have a size and shape for driving a pipe for forming a body of the pipe moving device. The moving body 810 may be provided with various sensors 530, 540, and 560 or various components for moving and/or inspecting the pipe.

In detail, a plurality of driving cups 820 may be arranged in the moving body 810 to be spaced apart from each other. The driving cup 820 may be in close contact with the inner wall of the pipe and block the flow of fluid in the pipe, so that the moving body 810 may drive inside the pipe by a differential pressure between a front end and a rear end of the moving body 810.

Further, a guide part 830 may be located adjacent to the driving cup 820. The guide part 830 may be in close contact with the inner wall of the pipe to smoothen driving of the moving body 810, for example, to reduce a frictional force. When a posture of the moving body 810 is changed in a state in which the guide part 830 is in close contact with the inner wall of the pipe, a rotational angle between the guide part 830 and the moving body 810 may be changed as the guide part 830 rotates.

Further, an angle sensor 840 may be provided on a front surface of the moving body 810. The angle sensor 840 may photograph an inside of the pipe on the front surface of the moving body 810 to generate depth data.

Further, an odometer 850 may be provided at a rear end of the moving body 810. The odometer 850 may rotate while in close contact with the inner wall of the pipe. A rotational amount may be changed to a linear speed and thus used to measure a driving distance.

The illustration in FIG. 8 is exemplary, and various configurations may be applied according to the embodiment of the present invention.

FIG. 9 is an exemplary view for describing a posture measurement according to an embodiment of the present invention.

Referring to FIG. 9, a process of calculating an inclination angle using guide parts 930 and 940 in a moving body 920 moving inside a pipe 910 is illustrated.

In the moving body 920, the first guide part 930 and the second guide part 940 may be spaced a predetermined length 950 from each other. The first guide part 930 and the second guide part 940 may be located at the same location in a circumferential direction of the moving body 920.

Each of the guide parts 930 and 940 may include a guide wheel and a support portion, and one end of the support portion may be connected to the guide wheel, and the other end thereof may be rotatably connected to the moving body 920. The guide wheel may be in close contact with the inner wall of the pipe 910 through rotation of the support portion.

An angle by which an extension part rotates from the moving body 920 may be a rotational angle. A first rotational angle of the first guide part 930 and a second rotation angle of the second guide part 940 are measured, and an inclination angle of the moving body 920 may be calculated based on this, for example, according to Equation 1.

The illustration in FIG. 9 is exemplary, and various configurations may be applied according to the embodiment of the present invention.

The method according to the embodiment of the present invention may be implemented in the form of a program instruction that may be executed through various computer means and recorded on a computer-readable medium. The computer-readable medium may include a program command, a data file, a data structure, and the like alone or in combination. The program command recorded in the medium may be specially designed and configured for the present invention or may be known to and used by those skilled in computer software. Examples of a computer-readable recording medium include magnetic media such as hard disks, floppy disks, and magnetic tapes, optical media such as CD-ROMs and DVDs, magneto-optical media such as floptical disks, and hardware devices, such as ROMs, RAMs, and flash memories, that are specially configured to store and execute program instructions. Examples of the program command include machine language codes that are made by compilers as well as advanced language codes that may be executed by computers using interpreters or the like.

Further, the method according to the disclosed embodiments may be included and provided in a computer program product. The computer program product may be traded between a seller and a buyer as a product.

The computer program product may include an S/W program and a computer-readable storage medium in which the S/W program is stored. For example, the computer program product may include a product in the form of a S/W program (e.g., a downloadable app) that is electronically distributed through a manufacturer of electronic devices or an electronic market (e.g., Google Play Store or App Store). For the electronic distribution, at least a portion of the S/W program may be stored in a storage medium or may be temporarily generated. In this case, the storage medium may be a storage medium of a server of a manufacturer, a server of an electronic market, or a relay server that temporarily stores the SW program.

The computer program product may include a storage medium of a server or a storage medium of a client device in a system including the server and the client device. Alternatively, when there is a third device (e.g., a smartphone) that is communicatively connected to the server or the client device, the computer program product may include a storage medium of the third device. Alternatively, the computer program product may include the S/W program itself transmitted from the server to the client device or the third device or transmitted from the third device to the client device.

In this case, one of the server, the client device, and the third device may execute the computer program product to perform the method according to the disclosed embodiments. Alternatively, two or more of the server, the client device, and the third device may execute the computer program product to implement the method according to the disclosed embodiments in a distributed manner.

For example, a server (e.g., a cloud server or an artificial intelligence server) may execute the computer program product stored in the server to control the client device communicatively connected to the server to perform the method according to the disclosed embodiments.

Although embodiments have been described in detail above, the scope of rights of the present invention is not limited thereto, and various modifications and improvements by those skilled in the art using the basic concept of the present invention defined in the appended claims also belong to the scope of the present invention.

**Claims**

1. A method of measuring a posture, the method comprising:

   generating three-dimensional shape information of a pipe in which a moving body moves;
   generating an extension vector of the pipe from the three-dimensional shape information;
   generating a direction vector indicating a direction in which the moving body is oriented; and
   generating a first inclination angle of the moving body with respect to the pipe based on the extension vector and the direction vector.

2. The method of claim 1, wherein the first inclination angle comprises a pitch angle and a yaw angle.

3. The method of claim 1, wherein the three-dimensional shape information is based on depth data measured by a 3D depth sensor facing a front surface of the moving body.

4. The method of claim 3, wherein the three-dimensional shape information is generated by matching a standard pipe shape with respect to the depth data.

5. The method of claim 1, wherein the extension vector is a central vector of the pipe.

6. The method of claim 1, wherein the generating of the extension vector comprises generating a first plane across the pipe from the three-dimensional shape information, generating a second plane parallel to the first plane, and generating the extension vector from a first feature point inside the first plane and a second feature point, which corresponds to the first feature point, inside the second plane.

7. The method of claim 1, wherein the first inclination angle is generated by a vector difference between the extension vector and the direction vector.

8. The method of claim 1, further comprising:

   acquiring a first rotational angle between a first guide part provided in the moving body and the moving body;
   acquiring a second rotational angle between a second guide part spaced apart from the first guide part in an extension direction of the moving body and the moving body; and
   generating a second inclination angle of the moving body with respect to the pipe from the first rotational angle and the second rotational angle.

9. The method of claim 8, wherein the second inclination angle is generated according to Equation 1:

[Equation 1]

$$\alpha = \tan^{-1}\left(\frac{l_1 \sin\theta_1 - l_2 \sin\theta_2}{L - l_1 \cos\theta_1 + l_2 \cos\theta_2}\right)$$

where, in Equation 1, $\alpha$ is the second inclination angle, $\theta_1$ is the first rotational angle, $\theta_2$ is the second rotational angle, L is a distance between the first guide part and the second guide part, $l_1$ is a length of the first guide part, and $l_2$ is a length of the second guide part.

10. The method of claim 8, further comprising generating a third inclination angle based on the first inclination angle and the second inclination angle.

11. The method of claim 10, wherein, in the generating of the third inclination angle, the same weight or different weights are applied to the first inclination angle and the second inclination angle.

12. A computer program stored in a recording medium to execute the method of any one of claims 1 to 11.

13. A device for measuring a posture, the device comprising:

a memory in which a program for executing a method of measuring a posture is stored; and
a processor that executes the program to generate three-dimensional shape information of a pipe in which a moving body moves, generate an extension vector of the pipe from the three-dimensional shape information, generate a direction vector indicating a direction in which the moving body is oriented, and generate a first inclination angle of the moving body with respect to the pipe based on the extension vector and the direction vector.

14. The device of claim 13, wherein the processor generates a second inclination angle of the moving body with respect to the pipe from a first rotational angle between a first guide part provided in the moving body and the moving body and a second rotational angle between a second guide part spaced apart from the first guide part in an extension direction of the moving body and the moving body.

15. A system for measuring a posture, the system comprising:

the device for measuring a posture according to claim 13;
a moving body that drives inside the pipe;
a depth sensor provided in the moving body and configured to generate depth data of the pipe; and
an inertial sensor provided in the moving body and configured to measure an acceleration and an angular velocity according to movement of the moving body.

16. The system of claim 15, further comprising an angle sensor configured to measure a rotational angle between a guide part connected to the moving body and the moving body.

[FIG. 1]

100

```
        ┌─────────────┐
        │    START    │
        └──────┬──────┘
               │
               ▼
    ┌─────────────────────┐
    │   GENERATE THREE-    │ ─── S110
    │  DIMENSIONAL SHAPE   │
    │     INFORMATION      │
    └──────────┬──────────┘
               │
               ▼
    ┌─────────────────────┐
    │  GENERATE EXTENSION  │ ─── S120
    │       VECTOR         │
    └──────────┬──────────┘
               │
               ▼
    ┌─────────────────────┐
    │  GENERATE DIRECTION  │ ─── S130
    │       VECTOR         │
    └──────────┬──────────┘
               │
               ▼
    ┌─────────────────────┐
    │   GENERATE FIRST     │ ─── S140
    │  INCLINATION ANGLE   │
    └──────────┬──────────┘
               │
               ▼
        ┌─────────────┐
        │     END     │
        └─────────────┘
```

[FIG. 2]

200

START

ACQUIRE FIRST ROTATIONAL ANGLE — S210

ACQUIRE SECOND ROTATIONAL ANGLE — S220

GENERATE SECOND INCLINATION ANGLE — S230

END

[FIG. 3]

300

[FIG. 4]

400

440 PROCESSOR

410 COMMUNICATION UNIT

420 INPUT UNIT

430 MEMORY

[FIG. 5]

500

520 MOVING BODY

540 INERTIAL SENSOR

560 ANGLE SENSOR

510 POSTURE MEASURING DEVICE

530 3D DEPTH SENSOR

550 GUIDE PART

[FIG. 6]

630

620       (a)       610

640      630

620       (b)       610

[FIG. 7]

730      740   750

720            760       710

[FIG. 8]

[FIG. 9]

## INTERNATIONAL SEARCH REPORT

| International application No. |
| --- |
| **PCT/KR2024/004767** |

**A. CLASSIFICATION OF SUBJECT MATTER**

**G01C 21/16**(2006.01)i; **G01C 25/00**(2006.01)i; **G01C 9/02**(2006.01)i; **G01B 11/24**(2006.01)i; **F16L 55/26**(2006.01)i; F16L 101/30(2006.01)n

According to International Patent Classification (IPC) or to both national classification and IPC

**B. FIELDS SEARCHED**

Minimum documentation searched (classification system followed by classification symbols)

G01C 21/16(2006.01); F16L 1/11(2006.01); F16L 55/26(2006.01); F16L 55/32(2006.01); G01B 11/24(2006.01); G01B 21/32(2006.01); G01B 5/213(2006.01); G01C 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배관검사(in-line inspection), 인텔리전트 피그(intelligent PIG), 깊이 센서(depth sensor), 연장 벡터(extension vector), 지향 벡터(orientation vector), 회전 각도(rotation angle), 중심선(centerline)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2545671 B1 (KOREA GAS CORPORATION) 20 June 2023 (2023-06-20)<br>See paragraphs [0028]-[0092] and figures 1-4. | 1-16 |
| Y | JP 2023-173410 A (THE RITSUMEIKAN TRUST) 07 December 2023 (2023-12-07)<br>See paragraphs [0023]-[0029] and figures 2 and 3. | 1-16 |
| Y | JP 2006-064690 A (UNIVERSITY OF MIYAZAKI et al.) 09 March 2006 (2006-03-09)<br>See paragraph [0018] and figure 12. | 6 |
| Y | JP 4013820 B2 (JFE ENGINEERING CO., LTD.) 28 November 2007 (2007-11-28)<br>See paragraphs [0047]-[0052] and figures 1-4. | 8-11,14,16 |
| A | KR 10-1802650 B1 (UNIVERSITY-INDUSTRY COOPERATION GROUP OF KYUNG HEE UNIVERSITY) 30 November 2017 (2017-11-30)<br>See paragraphs [0075]-[0080] and figure 7. | 1-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 December 2024** | **17 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/004767** |

| C. | DOCUMENTS CONSIDERED TO BE RELEVANT | |
| --- | --- | --- |
| Category* | Citation of document, with indication, where appropriate, of the relevant passages | Relevant to claim No. |
| A | LIU et al. Compensation Method for Pipeline Centerline Measurement of in-Line Inspection during Odometer Slips Based on Multi-Sensor Fusion and LSTM Network. SENSORS. 29 August 2019, pp. 1-18.<br>        See pages 1-7 and figure 3. | 1-16 |

Form PCT/ISA/210 (second sheet) (July 2022)

**INTERNATIONAL SEARCH REPORT**
Information on patent family members

International application No.

**PCT/KR2024/004767**

| Patent document cited in search report | | | Publication date (day/month/year) | Patent family member(s) | | | Publication date (day/month/year) |
|---|---|---|---|---|---|---|---|
| KR | 10-2545671 | B1 | 20 June 2023 | KR | 10-2022-0105076 | A | 26 July 2022 |
| JP | 2023-173410 | A | 07 December 2023 | None | | | |
| JP | 2006-064690 | A | 09 March 2006 | JP | 3837431 | B2 | 25 October 2006 |
| JP | 4013820 | B2 | 28 November 2007 | JP | 2004-333149 | A | 25 November 2004 |
| KR | 10-1802650 | B1 | 30 November 2017 | KR | 10-2017-0128918 | A | 24 November 2017 |

Form PCT/ISA/210 (patent family annex) (July 2022)